(19) Europäisches Patentamt
European Patent Office
Office européen des brevets

(11) **EP 3 116 623 B1**

(12) **EUROPÄISCHE PATENTSCHRIFT**

(45) Veröffentlichungstag und Bekanntmachung des Hinweises auf die Patenterteilung:
**15.05.2019 Patentblatt 2019/20**

(21) Anmeldenummer: **15708437.7**

(22) Anmeldetag: **12.02.2015**

(51) Int Cl.:
**B01D 39/20** (2006.01)

(86) Internationale Anmeldenummer:
**PCT/EP2015/000307**

(87) Internationale Veröffentlichungsnummer:
**WO 2015/135620 (17.09.2015 Gazette 2015/37)**

(54) **VERFAHREN ZUR ANPASSUNG EINES FILTERMEDIUMS AN VORGEBBARE PARAMETER**

METHOD FOR ADAPTING A FILTER MEDIUM TO PREDEFINABLE PARAMETERS

PROCÉDÉ D'ADAPTATION D'UN MILIEU FILTRANT À DES PARAMÈTRES PRÉDÉFINISSABLES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **08.03.2014 DE 102014003314**

(43) Veröffentlichungstag der Anmeldung:
**18.01.2017 Patentblatt 2017/03**

(73) Patentinhaber: **Hydac Fluidcarecenter GmbH 66280 Sulzbach/Saar (DE)**

(72) Erfinder:
• **DUCHOWSKI, John Kazimierz 66115 Saarbrücken (DE)**
• **LANG, Timo 66540 Neunkirchen (DE)**

(74) Vertreter: **Bartels und Partner, Patentanwälte Lange Strasse 51 70174 Stuttgart (DE)**

(56) Entgegenhaltungen:
**US-A- 4 954 256      US-A1- 2012 248 034 US-B1- 6 383 386**

• **Gregor Hlawacek: "Kontaktwinkelmessung", , 12. Mai 2005 (2005-05-12), XP055188597, Gefunden im Internet: URL:http://www.researchgate.net/publicatio n/242304992_Kontaktwinkelmessung/links/028 9ebbc0cf2fd9a99bf1f4c.pdf [gefunden am 2015-05-11]**

EP 3 116 623 B1

**Beschreibung**

Die Erfindung betrifft ein Verfahren zur Anpassung eines Filtermediums an vorgebbare Parameter nach Patentanspruch 1.

US 6 383 386 B1 offenbart ein hydrophobes Verbundmaterial. Die Oberfläche des Verbundmaterials wird vorzugsweise mittels des Sol-Gel-Verfahrens hydrophob beschichtet. Das Verbundmaterial findet gemäß Ausführungsbeispiel bei der Dehydration von hitzeempfindlichen Fruchtsaft Anwendung. Auf der einen Seite des Verbundmaterials ist der Fruchtsaft angeordnet, wohingegen auf der anderen Seite eine Salzlösung angeordnet ist. Durch das hydrophobe Verbundmaterial kann Wasserdampf aus dem Fruchtsaft in die konzentrierte Salzlösung gelangen. Da beide Lösungen vorrangig Wasser enthalten, wird eine direkte Vermischung der beiden Lösungen durch die hydrophobe Eigenschaft des Verbundmaterials verhindert.

US 4,954,256 A betrifft eine mikroporöse Polymermembran mit einer kritischen Benetzungsoberflächenspannung von weniger als etwa 28 mN/m, die ein mikroporöses Polymermembransubstrat und ein mit allen Oberflächenabschnitten hiervon dauerhaft chemisch verbundenes Superstrat-Fluorpolymer aufweist. US 4,954,256 A betrifft auch ein Verfahren zur Herstellung solcher Membranen.

Durch Gregor Hlawacek: "Kontaktwinkelmessung", 12. Mai 2005 ist zur Bestimmung der Oberflächenenergie von Festkörpern die Kombination der Sessile Drop Methode mit der Theorie nach Owens-Wendt-Rabel-Kaelble (OWRK) bekannt. Das OWRK-Verfahren liefert den dispersiven und polaren Anteil der Oberflächenspannung einer Oberfläche. Dabei wird vorausgesetzt das nur gleichartige Wechselwirkungen zwischen den Phasen wirksam werden. Das heißt, wenn eine unpolare Flussigkeit auf eine polare Oberfläche gesetzt wird, können nur die dispersiven Anteile der Oberflächenspannungen mit einander wechselwirken. Folgende Geradengleichung wird beim OWRK-Verfahren verwendet:

$$\frac{(1+\cos\theta)\sigma_l}{2\sqrt{\sigma_l^D}} = \sqrt{\sigma_s^P}\sqrt{\frac{\sigma_l^P}{\sigma_l^D}} + \sqrt{\sigma_s^D}$$

Dabei bezeichnet $\sigma_s$ die Oberflächenspannung des Festkörpers und $\theta$ den Winkel der Tropfentangente im 3-Phasenpunkt. Die Grenzflächenspannung zwischen einem Festkörper mit der Oberflächenspannung $\sigma_s$ kann berechnet werden. Der dispersive Charakter der Wechselwirkung wird durch den Index D angezeigt. Durch Verwenden von mindestens zwei Flüssigkeiten mit bekanntem $\sigma^D$ und $\sigma^P$ ergibt sich aus vorstehender Geradengleichung eine Gerade. Durch lineare Regression können dann $\sigma_s^P$ aus dem Quadrat der Geradengleichung und $\sigma_s^D$ aus dem Quadrat des Ordinatenabschnitts berechnet werden.

Durch die DE 38 19 583 A1 sind ein Verfahren sowie Mittel zur Hydrophobierung keimdichter Luftfiltermaterialien bekannt, die bevorzugt in den Bereichen Anästhesie und Chirurgie eingesetzt werden. Das angesprochene Hydrophobiermittel, mit dem die Oberfläche der genannten Filtermaterialien behandelt wird, umfasst Silikone sowie Silikonverbindungen. Die Kontaktaufnahme mit dem Filtermaterial erfolgt durch Sprüh- oder Tauchverfahren sowie mittels Bedampfung. Das sich dabei in Lösung, Emulsion oder in reiner Form befindliche Hydrophobiermittel soll den Luftdurchsatz des Luftfiltermaterials verbessern, physiologisch unbedenklich sein und den medizinisch-hygienischen Anforderungen entsprechen.

Durch die DE 199 32 383 A1 ist ein Kraftstofffilter oder Tankeinfüllstutzeneinsatz als Formteil bekannt mit einem Korpus aus elektrisch nicht leitendem Kunststoff, dessen Oberfläche ganz oder teilweise mit streifen-, linien-, gitter- oder netzartiger Struktur aus einem elektrisch leitfähigen Material, vorzugsweise in Form einer elektrisch leitfähigen Polyacetatzusammensetzung, beschichtet ist, wobei unterschiedliche Bereiche dieser Struktur wahlweise untereinander elektrisch leitend miteinander verbunden sind. Dieses Formteil wird vorteilhaft nach dem Monosandwichverfahren oder nach dem Verfahren der sequentiellen Einspritzung hergestellt.

US 2012/0248034 A1 offenbart ein Filtermedium für Flüssigkeiten, das einen nassgelegten Vliesfilter mit einer Vielzahl von Fasern umfasst, die mit einer fluorhaltigen Beschichtung ummantelt sind.

Durch die DE 197 35 993 A1 ist ein Filterelement zur Flüssigkeitsfiltration, insbesondere in Form der Ölfilterung, bekannt mit einer zickzackförmig faltbaren Filterbahn aus einem Filtervlies. Das Filtervlies kann Metallfasern, Glasfasern und/oder Polyesterfasern beinhalten, wobei die zickzackförmig gefaltete Filterbahn aus vorgeprägten Filtervliesplatten oder aus einer aufgerollten Filtervliesbahn hergestellt ist. Sofern das Filterelement aus Glasfaservliesmaterialien aufgebaut ist, kann dieses in vorteilhafter Weise ein- oder beidseitig mit Polyesterfasern kaschiert bzw. beschichtet werden. Hierdurch ist eine Art Rillierung oder sonstige Prägung auf einfache Weise durchführbar und das empfindliche Glasfaservliesmaterial kann ohne zusätzliches Schutzvlies auf der An- oder der Abströmseite und gegebenenfalls auch ohne Stützgewebe zu einem Sternfalt-Filterelement verarbeitet werden.

Stand der Technik ist also, durch entsprechende Beschichtungsverfahren bekannte Filtermedien für die Luft-, Kraftstoff- und Ölfiltration so zu verändern, insbesondere zu veredeln, dass verbesserte Eigenschaften für das jeweilige Filtermedium geschaffen sind. Eine gezielte Anpassung an vorgebbare gewünschte Parameter erfolgt jedoch nicht; vielmehr wird je nach Parameter oder Anforderungsprofil mehr oder minder wahllos und in der Art eines Ausprobierens das jeweilige Filtermedium mit Materialien beschichtet, von denen man sich entsprechende Verbesserungen im Betrieb des Filtermediums erhofft.

Ausgehend von diesem Stand der Technik liegt der Erfindung die Aufgabe zugrunde, in gezielter Weise eine Anpassung des Filtermediums an die vorstehend beschriebenen beispielhaften Parameterwerte vorzunehmen. Eine dahingehende Aufgabe löst ein Verfahren mit den Merkmalen des Patentanspruchs 1 in seiner Gesamtheit.

Gemäß Patentanspruch 1 ist bei dem Verfahren zur Anpassung eines Filtermediums in plissierter Form an vorgebbare Parameter, wie

- elektrostatische Aufladung,
- Durchfluss-, Staudruck- oder Differenzdruckverhalten,
- Fraktionsabscheidegrad, und
- Konstantmengen- und Qualitätserhaltung von Fluidadditiven, vorgesehen, dass vor dem Plissieren die Anpassung an mindestens einen der genannten Parameter durch gezielte Beeinflussung der Oberflächenenergie des Filtermediums erfolgt, wobei die Oberflächenenergie des jeweiligen Filtermediums in einen dispersen und einen polaren Anteil aufgeteilt wird, wobei mittels geeigneter Auswahl von Auftragverfahren sowie von Auftragmedien das jeweilige Verhältnis der dispersen und polaren Anteile zueinander derart eingestellt wird, dass das derart behandelte Filtermedium optimal an die vorgebbaren Parameter angepasst wird, wobei die jeweils herrschende Oberflächenenergie nebst ihrer dispersen oder polaren Anteile mittels einer Kontaktwinkelmessung (KW) bestimmt wird und zwar am
- Filtermedium selbst und/oder
- das Filtermedium durchströmenden Fluid, wobei als Auftragmedium für das Filtermedium ein Beschichtungsmaterial zum Einsatz kommt, das
- selbstvernetzend zu beschichtende Fasern des Filtermediums umhüllt und/oder
- kovalente Bindungen mit freien Radikalen des Fasermaterials des Filtermediums derart eingeht, dass das Beschichtungsmaterial auf zumindest Teilen der Oberfläche des Filtermediums polymerisiert, wobei das Verfahren als
- nasschemisches Beschichtungsverfahren, insbesondere in der Art eines Sol-Gel Sprühverfahrens, oder
- chemisches Gasabscheideverfahren (CVD), oder
- physikalisches Gasabscheideverfahren (PVD) konzipiert ist.

Dadurch, dass die Anpassung an mindestens eine der genannten Parameter durch gezielte Beeinflussung der Oberflächenenergie des Filtermediums erfolgt, findet die Anpassung nicht mehr wahllos und versuchsweise statt, sondern gezielt, indem man die jeweilige Oberflächenspannung von Fluiden, wie Hydrauliköl, Kraftstoff oder Luft, und/oder von Festkörpern, wie Filterelementmaterialien (Filtermedium), betrachtet. Der dahingehenden Oberflächenenergiebetrachtung liegt die Erkenntnis zugrunde, dass die Oberflächenenergie des jeweiligen Filtermediums sich in einen dispersen und einen polaren Anteil aufteilen lässt und dass mittels geeigneter Auswahl von Auftragverfahren sowie von Auftrag- oder Eindringmedien das jeweilige Verhältnis der dispersen und polaren Anteile zueinander derart einstellbar ist, dass das derart behandelte Filtermedium für seinen Betrieb optimal an die vorgebbaren Parameter angepasst wird.

Zur Bestimmung der jeweils herrschenden Oberflächenenergie nebst ihrer dispersen oder polaren Anteile dient bevorzugt eine Kontaktwinkelmessung, und zwar am Filtermedium selbst und/oder am das Filtermedium durchströmenden Fluid. Ist beispielsweise für das Filtermedium der bestimmende Parameter die Elektrostatik im Sinne, dass eine elektrostatische Aufladung, die das Filtermedienmaterial schädigen kann, vermieden ist, spielt die Größe der Differenz zwischen der Oberflächenspannung des zu filtrierenden Hydrauliköls und der Oberflächenenergie des Filtermaterials oder Filtermediums die entscheidende Rolle bei der Ölaufladung. Dabei hat es sich gezeigt, dass, je ähnlicher die Materialien von der Oberflächenenergie her sind, desto weniger mit Ölaufladung im Betrieb zu rechnen ist. Ausgehend von der für Materialien bekannten triboelektrischen Spannungsreihe ist also das Material des Filtermediums von der zu ermittelnden Oberflächenenergie her ähnlich zu konzipieren wie das zu filtrierende Hydrauliköl und der eingesetzte Beschichtungswerkstoff.

Das Durchflussverhalten, das sich im Differenzdruck niederschlägt, kann durch das Einstellen der Oberflächenenergie des Filtermediums gleichfalls entscheidend beeinflusst werden. Mit steigender Hydrophobizität des Materials erhöht sich der sog. Bubblepoint, also derjenige Druck, der benötigt wird, die Flüssigkeit zum ersten Mal in die Poren des Filtermediums zu drücken, gemäß Inhalt der sog. Washburn-Gleichung. Ist das Material benetzt, verringert sich der Durchflusswiderstand aufgrund der "Abstoßung der Flüssigkeit" an der Grenzfläche zwischen Filtermedium und Flüssigkeit durch die hydrophobe Beschichtung. Anwendungsgebiete sind hier vornehmlich neben den Hydraulikfiltern auch Luftfilter. Vergleichbare Überlegungen gelten auch, wenn man den sog. Wassereindringdruck (Staudruck) durch Einstellen der Oberflächenenergie des Filtermediums entscheidend beeinflussen möchte.

Als weiterer Parameter kann der Fraktionsabscheidegrad oder der Koaleszenzfaktor durch das Einstellen der Oberflächenenergie des Filtermediums beeinflusst werden. Mit steigender Hydrophobizität des Filtermediums (Filtermaterials) kann sich der Fraktionsabscheidegrad wesentlich erhöhen. Das Filtermedium ist dann wesentlich resistenter gegen Penetration mit Flüssigkeitströpfchen aus der Luft, so dass sich diese besser aus einem Luftstrom abscheiden lassen. Dieser Effekt kann bei Luftfiltern, Belüftungsfiltern oder sog. Koaleszenzfiltern als Sperrschicht, beispielsweise für die Ölnebelabscheidung, zur Anwendung kommen.

Bei der Konstantmengen- und Qualitätserhaltung von Fluidadditiven wird die ungewollte Abscheidung von Öladditiven aus dem Fluid vermieden, die beispielsweise der Ölalterung entgegenwirken, und zwar wiederum durch sinnfällige Einstellung der Oberflächenenergie. Im Öl dispergierte Additive, die als nicht gelöste Stoffe vorliegen, beispielsweise in Form von Silikontröpfchen als Anti-Schaum-Additiv für das Öl, werden an der Oberfläche eines Filtermediums aufgrund von Grenzflächeneffekten, wie Van-der-Waals-Kräfte und ähnliches, abgeschieden. Durch eine gezielte Änderung der Oberflächenenergie werden diese Effekte vermindert, wenn nicht gar verhindert. Dementsprechend können oberflächenmodifizierte Filtermedien "sanfter" bei der Filtration sein und Eingriffe ins Additivpaket von Ölen vermeiden helfen.

Anhand der gezielten Aufsplittung der Oberflächenenergie in polare und disperse Anteile, können theoretische Kombinationen zur vollständigen Benetzung durch vorgebbare Vergleichskurven (Wetting Envelope) dargestellt werden. Daraus kann das Benetzungsverhalten oder andere Effekte des Filtermediums in Bezug auf die zu benetzende Flüssigkeit verlässlich abgeschätzt werden.

Weitere vorteilhafte Ausführungsformen des erfindungsgemäßen Verfahrens sind Gegenstand der Unteransprüche.

Mit dem erfindungsgemäßen Verfahren ist das Filtermedium insbesondere zumindest teilweise aus Glasfasern hergestellt, die zumindest teilweise von polymerisierten Siliziumdioxid-Molekülen bindungsfrei ummantelt sind oder die Glasfasern gehen eine kovalente Bindung mit Fluorpolymeren, Polyethylen oder Polypropylen ein.

Darüber hinaus haben sich in vorteilhafter Weise folgende weitere Beschichtungen zur Modifizierung der Oberflächenenergie des Filtermediums erwiesen, beispielsweise in Form von Polydimethylsiloxanen (PDMS) oder in Form von Poly-3,4-ethylendioxythiophen (PEDOT).

Im Folgenden wird die erfindungsgemäße Lösung anhand verschiedener Ausführungsformen nach der Zeichnung näher erläutert. Dabei zeigen in prinzipieller und nicht maßstäblicher Darstellung die

Fig. 1     den vorrichtungsgemäßen Aufbau zur Veredelung des Filtermaterials oder Filtermediums mittels eines Sol-Gel Sprüh-verfahrens;

Fig. 2     die Strukturformel für ein Molekül des zur Beschichtung eingesetzten Siliziumdioxids;

Fig. 3     ausschnittsweise die miteinander vernetzten Siliziumdioxid-Moleküle;

Fig. 4a, b     den jeweiligen Kontaktwinkel gegen Wasser und Öl durch Ändern der Oberflächenenergie des Filtermediums mittels des jeweiligen erfindungsgemäßen Beschichtungsverfahrens;

Fig. 5     den vorrichtungsgemäßen Aufbau zur Veredelung des Filtermediums durch Abscheiden von Monomeren aus der Gasphase; und

Fig. 6     graphische Darstellung eines Wetting Envelope Schemas für Filtermaterialien.

Filtermedien, insbesondere in plissierter Form und daraus aufgebaute Filterelemente, insbesondere zur Filtration von Fluiden, wie Hydrauliköl, sind hinreichend bekannt und beispielsweise in den Schutzrechtsanmeldungen DE 10 2013 000 932, DE 10 2013 000 933, DE 10 2013 000 934, DE 10 2013 000 939, DE 10 2013 020 752 etc. der Schutzrechtsinhaberin eingehend beschrieben, so dass an dieser Stelle hierauf nicht mehr näher eingegangen wird und das erfindungsgemäße Filtermedium nebst seinem jeweiligen Herstellverfahren im Folgenden nur noch insoweit beschrieben wird, als es auf die Veredelung, insbesondere durch die gezielte Beeinflussung der Oberflächenenergie des Filtermediums, ankommt.

Filtermedien, auch wenn sie mehrlagig aufgebaut sind unter Einbezug von Schutzvliesen und Stützgittern, weisen regelmäßig einen hohen Anteil an Glasfasern zur Filtration von Fluiden, wie Luft, Gasen, Prozesswässern, Kraft- und Schmierstoffen sowie Hydrauliköl etc., auf. Die genannten Glasfasern zur Filtration bestehen neben Siliziumdioxid aus weiteren Oxiden, wie Aluminium (Al), Barium (Ba), Bor (B), Kalzium (Ca), Kalium (K), Magnesium (Mg), Mangan (Mn) und Zink (Zn), in unterschiedlichsten Zusammensetzungen. Neben dem allseits bekannten Borosilikatglas werden auch spezielle Glaszusammensetzungen verwendet, wie alkaliarmes, eisenhaltiges Glas (E-Glas); säurefestes, kohlenstoffreiches Glas (C-Glas); schwermetallarmes Glas; borarmes Glas oder Quarzglas. Die Komponenten werden gemischt aufgeschmolzen und zu Glasperlen oder Pellets abgekühlt. Durch erneutes Aufschmelzen und Pressen des flüssigen Glases durch Düsen wird das Glas in die Länge gezogen und auf einem Metallsieb abgelegt. Eine weitere Herstellungsart ist, dass Glasstäbe durch eine Gasflamme erhitzt in die Länge gezogen und anschließend auf einem Sieb abgelegt werden.

Aus den hieraus entstandenen Glasfasern werden in einer Papiermaschine diese zu Filtermaterial weiterverarbeitet. Die Glasfasern werden dabei in einem Pulper in Wasser dispergiert. Um den Glasfasern Festigkeit zu geben, erfolgt die Faserbindung unter Einsatz eines Acrylats oder Epoxidharzes. Der dahingehende Binder wird vor dem endgültigen Ablegen auf einem Sieb oder am Ende des Siebes unter Vakuum auf die nasse Papierbahn gebracht. Anschließend wird das Glasfasermedium in einer Trockenstufe getrocknet und ist für den Einsatz als Filtermaterial geeignet.

Ein weiter sehr häufig eingesetztes Filtermaterial für ein Filtermedium besteht aus sog. Meltblownfasern. Die Meltblownfaserherstellung erfolgt regelmäßig in einem Prozess, bei dem nichtgewebte Stoffe direkt aus Granulat hergestellt werden. Ein spezielles Spinnverfahren in Kombination mit Hochgeschwindigkeits-Heißluft wird dazu genutzt, um feinfaserige Stoffe mit unterschiedlichen Strukturen zu produzieren. In einem Extruder aufgeschmolzenes Granulat wird über eine Spinnpumpe direkt in einen Düsenblock gefördert. Nach dem Austritt durch die Düsenspitze wird das Polymer durch komprimierte Prozess-Heißluft verstreckt. Das entstehende Mikrofaservlies wird auf einem luftdurchlässigen Siebband abgelegt. Zur Herstellung von Laminaten ist die Meltblown-Anlage um eine Abrollstation vor und hinter der Düse erweitert. Ein Kalander verbindet die zugeführten Materialien miteinander. Mögliche Einsatzmaterialien sind Polypropylen (PP), Polybutylenterephthalat (PBT), Polyethylen (PE), Polyamid (PA) und vergleichbare weitere Kunststoffe. Das derart jeweils hergestellte Filtermaterial wird anschließend mit weiteren Filterlagen (Drahtgewebe, Vliese, Netze) in Messerfalt- oder Rotationsfaltmaschinen plissiert und zu einem Gesamt-Filterelement weiterverarbeitet. Die vorstehend beschriebenen Herstellverfahren gehören gleichfalls zum Stand der Technik.

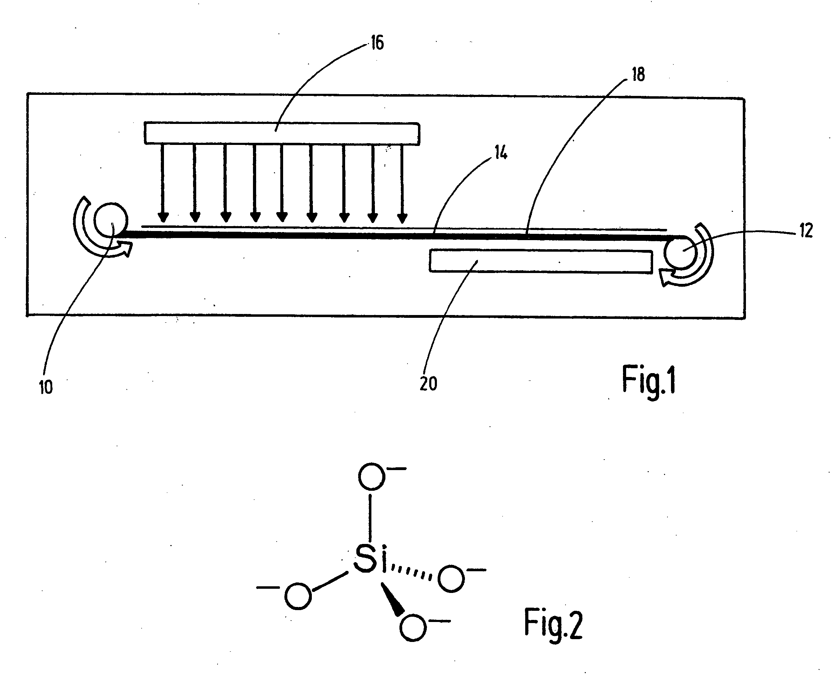

Im Folgenden wird nun beschrieben, wie das dahingehend bekannte Fasermaterial der Filtermedien entsprechend veredelt wird. In Abkehr zu der vorstehend beschriebenen Herstelllösung für ein Filtermedium wird vor dem Plissieren des Mediums mindestens ein Veredelungsschritt für das Filtermaterial oder Filtermedium durchgeführt. So lässt sich das fertig konfektionierte Glasfaserfiltermaterial vor dem Plissieren mittels einer Sprühtechnik veredeln. Hierzu wird gemäß der Darstellung nach der Fig. 1 in einer entsprechenden Vorrichtung ein sog. Sol-Gel Sprühverfahren durchgeführt. Hierzu wird das in Rollenform vorliegende Glasfasermedium zwischen zwei Rolleinheiten 10, 12 gemäß der angezeigten Pfeilrichtung ab- und wieder aufgespult. In der Transportstrecke 14 zwischen den beiden Rolleinheiten 10, 12 befinden sich ein oder mehrere Sprühbalken 16, mittels denen das Filtermaterial 18 gemäß den dargestellten vertikalen Pfeilen mit einem Beschichtungsstoff besprüht wird. Die derart aufgebrachte nass-chemische Ausrüstung auf das Glasfaserpapier werden in einer sich anschließenden Trocknungsstrecke 20 getrocknet und anschließend wieder aufgerollt über die nachfolgende Rolleinheit 12. Das derart aufgerollte Filtermedium kann dann direkt dem bereits angesprochenen Plissierprozess zur Herstellung des Komplettelements zugeführt werden. Anstelle des angesprochenen Sprühprozesses könnte der Beschichtungsstoff auch durch ein Tauchbad (nicht dargestellt) aufgebracht werden.

Als Beschichtungsstoff für dieses nass-chemische Sol-Gel Auftragverfahren kommen bevorzugt polymerisierte Siliziumdioxid-Moleküle zum Einsatz. Die Moleküle können in Kombination mit anderen chemischen Stoffen, beispielsweise Eisen, Magnesium, Kalzium, Fluor etc. und insbesondere auch als weitere Modifikationen der Oxide des Siliziums eingesetzt werden. Die Beschichtungsdicke kann durch die Anpassung der Parameter während des Auftragverfahrens von einigen Nanometern bis zu einem Mikrometer individuell an die Filtrationsaufgabe angepasst werden.

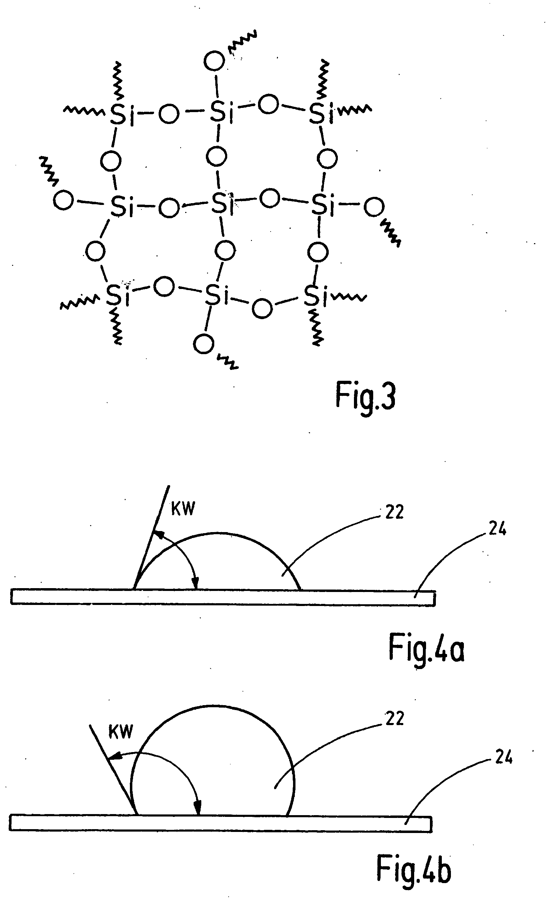

Während in der Fig. 2 in der Art einer Strukturformel das einzelne Siliziumdioxidmolekül wiedergegeben ist, zeigt die Fig. 3 die vernetzte Anordnung der dahingehenden Siliziumdioxid($SiO_2$)-Moleküle. Aufgrund der in Fig. 2 dargestellten elektro-negativen Sauerstoffgruppen erfolgt die angesprochene Vernetzung über Van-der-Waals-Kräfte zwischen den einzelnen Molekülgruppen. Für die dahingehende Bindung sind die Moleküle zunächst in einer Trägerflüssigkeit, beispielsweise in Form von Wasser, dispergiert worden. Die Trägerflüssigkeit wird in der Trocknungsstrecke 20 entfernt. Die als Beschichtung verbleibenden Moleküle sind dann, wie bereits dargelegt, selbstvernetzend, das bedeutet sie richten sich geometrisch aus und bilden ein zusammenhängendes Gebilde, wodurch die Glasfasern oder Meltblownfasern annähernd vollständig umhüllt und somit beschichtet werden, ohne dass es zu einer chemischen Verbindung zwischen dem Fasereintragmaterial und dem Beschichtungsstoff käme.

Das Hauptaugenmerk der vorliegenden Beschichtung liegt in der Erhöhung der Hydrophobizität (Oleophobizität). Durch Messung des Kontaktwinkels KW (Sessile Drop) kann die Oberflächenenergie bestimmt werden (beispielsweise mit den Methoden Owens, Wendt Rabel, Kälble, Wu etc.). Weitere Testmethoden betreffend die Ermittlung der Oberflächenenergie bestehen in der Du Pont-Testmethode oder im 3M-Water-Repellency-Test.

Bei der Kontaktwinkelmessung kann indirekt die Oberflächenenergie oder Oberflächenspannung des Filtermaterials bestimmt werden. Unbehandelte Filtermaterialien aus Glasfaser-Kunststoffen haben in der Regel einen Kontaktwinkel KW gegen Wasser ($H_2O$) und/oder Öl von < 90°, was in der Fig. 4a für einen entsprechenden Tropfen 22, der eine horizontal verlaufende Oberfläche 24 benetzt, gezeigt ist. Mit der vorstehend beschriebenen erfindungsgemäßen Beschichtung lässt sich gemäß der Darstellung nach der Fig. 4b der Kontaktwinkel KW gegen Wasser oder Öl jedoch deutlich über 90° erhöhen.

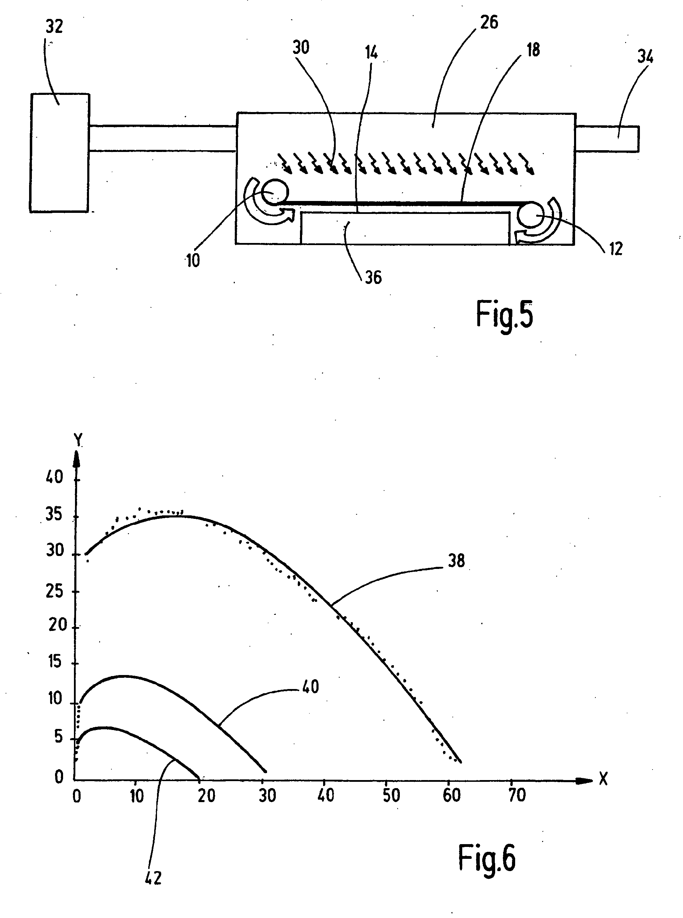

Die Fig. 5 zeigt nun ein weiteres Veredelungsverfahren für das genannte Filtermaterial, diesmal durch Abscheidung von Fluorpolymeren aus der Gasphase. Wiederum vor dem Plissierschritt wird das fertig konfektionierte Glasfaserfiltermaterial mittels einer im Vakuum stattfindenden Reaktion aus der Gasphasenabscheidung veredelt. Hierbei wird wieder das in Rollenform vorliegende Glasfasermedium zwischen den beiden Rolleinheiten 10, 12, wie durch die Pfeilrichtung angedeutet, ab- und wieder aufgespult. Die Transportstrecke 14 befindet sich diesmal in einer Vakuumkammer 26, in welcher später das Filtermaterial 18 mit einem Beschichtungsstoff behandelt wird.

Das Gesamt-Vorrichtungssystem wird in ein Niederdruckvakuum versetzt und ein Initialplasma aktiviert die Oberfläche durch Bildung von Stellen freier Radikale an der Oberfläche des Substrates in Form des Glasfasermaterials. Ein in die Kammer 26 eingeleiteter Beschichtungsstoff aus Monomergas bildet an der Oberfläche des Substrats oder Filtermaterials 18 kovalente Bindungen an den Stellen der freien Radikale. Somit wird der Beschichtungsstoff auf der Oberfläche verankert und ist extrem widerstandsfähig. Ein anschließend erzeugtes pulsierendes Plasma 30 aktiviert das aufgebrachte Beschichtungs-Monomer und veranlasst die Polymerisation des Stoffes an der Oberfläche des Filtermediums 18. Anschließend wird der Innendruck der Kammer wieder auf Umgebungsdruck gebracht und das Filtermaterial ist hydrophob/oliophob beschichtet. Vor dem Eintrag in die eigentliche Vakuumkammer 26 ist das Monomergas in einer Vorkammer 32 bevorratet und die Vakuumkammer 26 kann auf ihrer Ausgangsseite mit einer Art Abgas-Nachbehandlungseinrichtung 34 ausgestattet sein. Da die Plasmaabscheidung sehr hohe Energiemengen freisetzen kann, ist zur Kühlung des Filtermediums oder Filtermaterials 18 auf der Unterseite der dahingehenden Transportstrecke 14 eine kastenförmige Kühleinrichtung 36 angebracht.

Als Beschichtungsstoff für dieses Veredelungsverfahren aus der Gasphase kommen bevorzugt alle Fluorpolymere in Frage. Insbesondere sind die folgenden Monomere jedoch geeignet, in diesem Verfahren als Beschichtungsstoff polymerisiert zu werden:

- Ethylen (E)
- Propylen (P)
- Vinylfluorid (VF1)
- Vinylidenefluorid (VDF oder VF2)
- Tetrafluoroethylen (TFE)
- Hexafluoropropylen (HFP)
- Perfluoropropylvinylether (PPVE)
- Perfluoromethylvinylether (PMVE)
- Chlorotrifluoroethylen (CTFE)

Endprodukte, als Beschichtungsstoff zur Gruppe der Fluorpolymere gehörend, sind insbesondere:

- PVF (Polyvinylfluorid)
- PVDF (Polyvinyliden fluorid)
- PTFE (Polytetrafluoroethylen)
- PCTFE (Polychlorotrifluoroethylen)
- PFA (Perfluoroalkoxy polymer)
- FEP (Fluorinoertes Ethylen-propylen)

- ETFE (Polyethylentetrafluoroethylen)
- ECTFE (Polyethylenchlorotrifluoroethylen)
- FFPM/FFKM (Perfluoriniertes Elastomer [Perfluoroelastomer])
- FPM/FKM (Fluorocarbon [Chlorotrifluoroethylenvinyliden fluorid])
- PFPE (Perfluoropolyether)
- PFSA (Perfluorosulfonische Säure)

Die Beschichtungsdicke kann wiederum durch die Anpassung der Parameter während des Auftragverfahrens von einigen Nanometern bis zu einem Mikrometer individuell angepasst werden. Ferner ergeben sich vergleichbare Kontaktwinkel KW, wie sie in den Fig. 4a und 4b aufgezeigt sind. Die letztgenannte Beschichtung ist insgesamt im Bereich der Filtration von Hydraulik- und Schmieröl sowie im Bereich der Luft- und Kraftstofffiltration geeignet.

Neben der plasmaunterstützten chemischen Gasphasenabscheidung, wie vorstehend vorgestellt, können auch sonstige chemische Gasphasenabscheidungen zum Einsatz kommen. Gleichfalls geeignet sind physikalische Gasphasenabscheidungen, auch in plasmagestützter Form. Neben den vorstehend beschriebenen Beschichtungsmaterialien hat sich auch Polydimethylsiloxan (PDMS) sehr gut bewährt sowie Polythiophene verschiedenster Art. Anstelle der Glasfasermaterialien und der Meltblownfasern können auch Fasern aus Kunststoffmaterialien zur Anwendung kommen einschließlich Zellulosematerialien, die auch mit Phenolharz getränkt sein können.

Für eine exakte Ermittlung der Oberflächenspannung von Flüssigkeiten und Festkörpern wird diese in einen polaren Anteil und einen dispersen Anteil aufgeteilt. Während der polare Anteil der Oberflächenspannung sich aus einer Dipol-Dipol-Wechselwirkung sowie der Wasserstoffgruppenbindung oder der Lewis-Säure-Base-Wechselwirkung ergibt, ist der disperse Anteil der Oberflächenspannung maßgebend durch eine Van-der-Waals-Wechselwirkung charakterisiert.

Die Fig. 6 zeigt einen sog. Wetting Envelope für Filtermaterialien auf, aufgeteilt in den polaren Anteil der Oberflächenenergie in Y-Richtung und den dispersen Anteil der Oberflächenenergie aufgetragen in X-Richtung. Der jeweilige Anteil der Oberflächenenergie ist nach dem Kälble-Verfahren (OWRK) bestimmt, wobei die in Fig. 6 zuoberst gezeichnete Kurve 38 mit ihren gepunktet dargestellten Einzelmesswerten ein Standard-Filtermaterial betrifft. Die darunterliegende Kurve 40 betrifft ein beschichtetes Filtermaterial, wobei als Beschichtungswerkstoff Polydimethylsiloxan (PDMS) zum Einsatz gekommen ist. Die darunterliegende dritte Kurve 42 betrifft ein beschichtetes Filtermaterial, wobei hierfür ein gasphasenabgeschiedenes Fluorpolymer eingesetzt wurde. Je nach Grundwerkstoff des Filtermediums und dem jeweils mit dem Filtermedium zu filtrierenden Fluid unter Einbezug dieser Beschichtungsstoffe, die auch im Mehrlagenverbund aufgebracht werden können sowie unter Einbezug von deren Schichtdicke, ist eine vorgebbare Veränderung von polarem und dispersem Anteil der Oberflächenspannung möglich.

Man kann nun beispielsweise durch Praxisversuche oder durch theoretische Grundlagenüberlegungen jeder Filtrationsaufgabe nebst gewünschtem Parameter zugehörig, einen günstigen Kurvenverlauf der Oberflächenspannung ermitteln und dann, ausgehend von diesen gewonnenen Erkenntnissen, für jedes beliebige Filtermaterial oder Filtermedium den Veredelungsprozess derart wählen, dass in Zusammenwirken mit der zu filtrierenden Flüssigkeit oder dem Fluid sich die vorentwickelte Wetting Envelope - Kurve (Fig. 6) ergibt. Diese Idee der speziellen Veredelung über das Einstellen der polaren und dispersen Anteile der Oberflächenenergie für Filtermaterialien und Filtermedien hat so keine Entsprechung im Stand der Technik.

**Patentansprüche**

1. Verfahren zur Anpassung eines Filtermediums in plissierter Form an vorgebbare Parameter, wie

   - elektrostatische Aufladung,
   - Durchfluss-, Staudruck- oder Differenzdruckverhalten,
   - Fraktionsabscheidegrad, und
   - Konstantmengen- und Qualitätserhaltung von Fluidadditiven,

   wobei vor dem Plissieren die Anpassung an mindestens einen der genannten Parameter durch gezielte Beeinflussung der Oberflächenenergie des Filtermediums (18) erfolgt, wobei die Oberflächenenergie des jeweiligen Filtermediums (18) in einen dispersen und einen polaren Anteil aufgeteilt wird, wobei mittels geeigneter Auswahl von Auftragverfahren sowie von Auftragmedien das jeweilige Verhältnis der dispersen und polaren Anteile zueinander derart eingestellt wird, dass das derart behandelte Filtermedium (18) optimal an die vorgebbaren Parameter angepasst wird,

   wobei die jeweils herrschende Oberflächenenergie nebst ihrer dispersen oder polaren Anteile mittels einer Kontaktwinkelmessung (KW) bestimmt wird und zwar am
   - Filtermedium (18) selbst und/oder
   - das Filtermedium (18) durchströmenden Fluid, wobei als Auftragmedium für das Filtermedium (18) ein Beschichtungsmaterial zum Einsatz kommt, das
   - selbstvernetzend zu beschichtende Fasern des Filtermediums (18) umhüllt und/oder
   - kovalente Bindungen mit freien Radikalen des Fasermaterials des Filtermediums (18) derart eingeht, dass das Beschichtungsmaterial auf zumindest Teilen der Oberfläche des Filtermediums (18) polymerisiert,

   wobei das Verfahren als
   - nasschemisches Beschichtungsverfahren, insbesondere in der Art eines Sol-Gel Sprühverfahrens, oder
   - chemisches Gasabscheideverfahren (CVD), oder
   - physikalisches Gasabscheideverfahren (PVD) konzipiert ist.

2. Verfahren nach Anspruch 1, **dadurch gekennzeichnet, dass** für das nasschemische Beschichtungsverfahren Siliziumdioxid-Moleküle eingesetzt werden, insbesondere in polymerisierter Form.

3. Verfahren nach einem der vorstehenden Ansprüche, **dadurch gekennzeichnet, dass** die Siliziumdioxid-Moleküle in Kombination mit anderen chemischen Stoffen, wie Eisen, Magnesium, Kalzium oder Fluor, oder als weitere Modifikationen der Oxide des Siliziums vorliegen.

4. Verfahren nach einem der vorstehenden Ansprüche, **dadurch gekennzeichnet, dass** für das jeweilige Gasabscheideverfahren Monomere eingesetzt werden, die zu Fluorpolymeren, Polyethylen oder zu Polypropylen polymerisiert werden.

5. Verfahren nach einem der vorstehenden Ansprüche, **dadurch gekennzeichnet, dass** das Beschichtungsmaterial Polydimethylsiloxan (PDMS) oder Poly-3,4-ethylendioxythiophen (PEDOT) ist.

**Claims**

1. A method for adapting a filter medium in pleated form to predefinable parameters, such as

   - electrostatic charge,
   - flow-rate behaviour, dynamic pressure behaviour, or differential pressure behaviour,
   - fractional efficiency, and
   - preservation of constant quantity and quality of fluid additives,

   wherein the adaptation is made to at least one of the named parameters by targeted influencing of the surface energy of the filter medium (18) prior to pleating, wherein the surface energy of the respective filter medium (18) is subdivided into a disperse and a polar fraction, wherein, by means of suitable selection of coating methods and coating media, the respective ratio of disperse and polar fractions is set relative to one another such that the thus-treated filter medium (18) is adapted to the predefinable parameters in optimal manner,

   wherein the respectively prevailing surface energy, together with its disperse or polar fractions, is determined by means of a contact angle measurement (KW), specifically on
- the filter medium (18) itself and/or
- the fluid flowing through the filter medium (18), wherein a coating material is used as application medium for the filter medium (18), which
- encases, in self-cross-linking manner, fibres of the filter medium (18) to be coated and/or
- forms covalent bonds with free radicals of the fibre material of the filter medium (18) such that the coating material is polymerised on at least portions of the surface of the filter medium (18), wherein the method is designed as a
- wet chemical coating method, in particular in the manner of a sol-gel spray method, or
- chemical gas separation method (CVD), or
- physical gas separation method (PVD).

2. The method according to claim 1, **characterised in that** silicon dioxide molecules, in particular in polymerised form, are used for the wet chemical coating method.

3. The method according to one of the preceding claims, **characterised in that** the silicon dioxide molecules are present as further modifications of the oxides of the silicon in combination with other chemical substances, such as iron, magnesium, calcium or fluorine.

4. The method according to one of the preceding claims, **characterised in that** monomers, which are polymerised to form fluoropolymers, polyethylene or polypropylene, are used for the respective gas separation method.

5. The method according to one of the preceding claims, **characterised in that** the coating material is polydimethylsiloxane (PDMS) or poly(3,4-ethylenedioxythiophene) (PEDOT).

**Revendications**

1. Procédé d'adaptation d'un milieu filtrant sous forme plissée à des paramètres pouvant être donnés à l'avance, comme

- la charge électrostatique,
- le comportement à la pression, à la pression dynamique ou à la différence de pression,
- le degré de précipitation en fraction et
- le maintien d'une quantité constante et d'une qualité constante d'additifs fluides,
dans lequel, avant le plissement, on effectue une adaptation d'au moins l'un des paramètres mentionnés, en influençant de manière ciblée l'énergie superficielle du milieu (18) filtrant, l'énergie superficielle du milieu (18) filtrant respectif étant subdivisée en une composante disperse et en une composante polaire, dans lequel, au moyen d'un choix approprié de procédés de dépôt ainsi que de milieux de dépôt, on règle le rapport respectif des composantes disperse et polaire, l'une par rapport à l'autre, de manière à ce que le milieu (18) filtrant ainsi traité soit adapté au mieux aux paramètres pouvant être donnés à l'avance,
dans lequel on détermine l'énergie superficielle régnant respectivement, outre ses composantes disperse ou polaire, au moyen d'une mesure (KW) d'angle de contact, et cela, sur
- le milieu (18) filtrant soi-même et/ou
- le fluide passant à travers le milieu (18) filtrant, dans lequel on utilise, comme milieu de dépôt pour le milieu (18) filtrant, une matière de revêtement, qui
- gaine avec autoréticulation des fibres à revêtir du milieu (18) filtrant et/ou
- entre en des liaisons covalentes avec des radicaux libres de la matière fibreuse du milieu (18) filtrant, de manière à polymériser la matière de revêtement sur au moins des parties de la surface du milieu (18) filtrant,
le procédé étant conçu sous la forme
- d'un procédé de revêtement chimique en voie humide, notamment à la manière d'un procédé de pulvérisation sol-gel ou
- d'un procédé de dépôt chimique en phase gazeuse (CVD) ou
- d'un procédé de dépôt physique en phase gazeuse (PVD).

2. Procédé suivant la revendication 1, **caractérisé en ce que**, pour le procédé de revêtement chimique en voie humide, on utilise des molécules de dioxyde de silicium, notamment sous forme polymérisée.

3. Procédé suivant l'une des revendications précédentes, **caractérisé en ce que** les molécules de dioxyde de silicium se présentent en combinaison avec d'autres substances chimiques, comme du fer, du magnésium, du calcium ou du fluor ou sous la forme d'autres modifications des oxydes du silicium.

4. Procédé suivant l'une des revendications précédentes, **caractérisé en ce que**, pour le procédé de dépôt en phase gazeuse respectif, on utilise des monomères, qui sont polymérisés en polymères fluorés, en polyéthylène ou en polypropylène.

5. Procédé suivant l'une des revendications précédentes, **caractérisé en ce que** la matière de revêtement est du polydiméthylsiloxane (PDMS) ou du poly-3,4-éthylènedioxythiophène (PEDOT).

Fig.1

Fig.2

Fig.3

Fig.4a

Fig.4b

Fig.5

Fig.6

**IN DER BESCHREIBUNG AUFGEFÜHRTE DOKUMENTE**

**In der Beschreibung aufgeführte Patentdokumente**

- US 6383386 B1
- US 4954256 A
- DE 3819583 A1
- DE 19932383 A1
- US 20120248034 A1
- DE 19735993 A1

- DE 102013000932
- DE 102013000933
- DE 102013000934
- DE 102013000939
- DE 102013020752

**In der Beschreibung aufgeführte Nicht-Patentliteratur**

- **GREGOR HLAWACEK.** *Kontaktwinkelmessung,* 12. Mai 2005